# EUROPEAN PATENT SPECIFICATION

(11) **EP 4 265 925 B1**
(45) Date of publication and mention of the grant of the patent: **13.03.2024**
(21) Application number: 22169552.1
(22) Date of filing: 22.04.2022
(51) Int. Cl.: F16B 2/24, F16B 5/06, F16B 37/04, F16B 5/02

(54) **CLIPPING DEVICE FOR ATTACHMENT TO A PANEL**
VORRICHTUNG ZUR BEFESTIGUNG AN EINER PLATTE
DISPOSITIF DE FIXATION SUR UN PANNEAU

(43) Date of publication of application: 25.10.2023
(73) Proprietor: Bhavya Jumps GmbH, 33602 Bielefeld (DE)
(72) Inventor: MALHOTRA, Sanjay, 33619 Bielefeld (DE)
(74) Representative: Prüfer & Partner mbB Patentanwälte · Rechtsanwälte

(56) References cited:
- US-A- 4 729 706
- US-A- 4 897 005
- US-A- 4 955 772

## Description

The present invention relates to a clipping device that serves for attachment to a panel, and to a system comprising such a clipping device and at least one panel.

Such clipping devices are configured to attach onto a first panel a second panel by use of a connector bolt, such as a screw. For this purpose, the bolt or screw extends through openings provided in the panels and is screwed into a nut part of the clipping device.

US 7,896,596 B2 discloses a U-shaped clamping piece for attachment to a panel having an opening, the clamping piece comprising two flat legs connected by a yoke, and a nut part axially movably disposed between the two legs for receiving a bolt. The nut part is non-rotatably held on the clamping piece by a lateral arm. The nut part is secured to the leg or to the yoke by means of straps.

US 4,897,005 A discloses a fastener clip adapted to attach to sheet materials, the clip having two legs and an elongated tongue arranged between the two legs and attached to the first leg. The second leg has a threaded means for receiving a bolt.

It is an object of the present invention to provide an alternative or an improved clipping device that serves for attachment to a panel.

The object is solved by a clipping device according to claim 1 and by a system according to claim 14. Further developments are given below and in the dependent claims. The system can also be further developed by features of the clipping device, and vice versa.

A clipping device according to the invention serves for attachment to a panel and has the features defined in claim 1.

The terms "resiliently compressible" and "resiliently expandable" used herein preferably imply that the clamping element substantially restores its original state and/or shape upon removal of a force that caused deformation, i.e. compression and/or expansion, of the clamping element. Preferably, a panel to be attached to the clipping device is received between the clamping element and the second leg. Preferably, the panel is clamped between the clamping element and the second leg by means of a resiliency of the clamping element.

Preferably, a resiliency of the clamping element exceeds a resiliency of the legs and of the connecting portion of the clipping device. Thus, preferably only, or at least to a predominant extent, the resiliency of the clamping element effects clamping of the panel when it is inserted into the clipping device. The legs and connecting portion, on the other hand, are preferably substantially rigid, thus providing for good stability of the clipping device.

The clipping device as described herein, for example, provides for a simple structure while at the same time being easy to use. According to the invention, the nut part is arranged outside the space formed between the first and second legs. Hence, the nut part may be integrally provided or firmly attached to the respective leg, which facilitates the overall structure and the use of the clipping device. The clamping element being provided at least partially between the legs may provide for a more compact structure of the clipping device. Preferably, a major part of the clamping element is provided within the space formed between the legs.

Preferably, the clamping element comprises a first end and a second end, the first end being attached to the first leg, and a contact portion facing the second leg.

A space formed between the contact portion of the clamping element and the second leg preferably serves to receive a panel therein. The resiliency of the clamping element can provide for a clamping force that attaches the panel to the clipping device, for example. This may provide for a simple structure of the clipping device.

Preferably, the second end of the clamping element is attached to the connecting portion. This may, for example, reduce an overall size of the clipping device.

Preferably, in a state of the clipping device in which no panel is inserted in the clipping device, a minimum distance between a contact face of the contact portion that faces the second leg and the second leg is smaller than a thickness of a panel to be inserted. This may provide, for example, for a compression of the clamping element when a panel is inserted into the clipping device, such that the clamping element exerts a clamping force onto the panel once inserted.

Preferably, the contact portion has a substantially flat shape and is further preferably arranged substantially parallel to a face of the second leg facing the contact portion. The flat shape of the contact portion can provide for a large contact area of the clamping element with an inserted panel, for example.

Preferably, the contact portion is arranged in the space formed between the first and second legs and at a distance from the first leg. This means that the contact portion preferably protrudes form the first leg of the clipping device so as to provide for sufficient space for deformation of the clamping element, for example.

Preferably, the clamping element comprises a curved portion adjacent the first end or the second end, which curved portion protrudes from the first leg in a direction away from the second leg in a section thereof. Preferably, the clamping element is substantially S-shaped at least in a portion thereof, preferably in a portion extending from the first or second end to the contact portion. The curved portions or S-shape can provide resiliency to the clamping element, for example.

Preferably, each one of the first leg, the second leg and the clamping element comprises an opening, the openings being arranged coaxial with respect to one another so as to receive a bolt within the openings, and wherein the nut part comprises a bore coaxial with the openings of the first and second legs and the clamping element. Further preferably, the opening of the clamping element has an elongate shape, the elongate shape preferably extending at least along the entire length of the contact portion of the clamping element. Since the openings or apertures are arranged axially aligned with one another, a bolt or screw can be inserted in an easy manner, for example.

Preferably, a protrusion is formed around an edge of the opening of the second leg, the protrusion protruding further into the space formed between the first and second legs than a face of the second leg facing the contact portion. The protrusion formed around the edge of the second leg may serve for engagement with an opening provided in a panel to be inserted into the clipping device. This can facilitate insertion of the panel into the clipping device, for example.

Preferably, the bore of the nut part is unthreaded. Further preferably, a self-tapping screw is used for insertion into the unthreaded bore. This may improve a strength of a connection of the clipping device to a panel, for example.

Preferably, the nut part is fixed to the respective leg with respect to axial and/or rotational displacement. This can facilitate insertion of a bolt or screw into the nut part, for example.

A system according to the invention comprises a clipping device described above, and a first panel configured to be received between the clamping element and the second leg of the clipping device. Preferably, the system further comprises a bolt, in particular a self-tapping screw, to firmly attach the panel to the clipping device and preferably also to a second panel. Thus, the same effects as for the clipping device described above can be achieved for a system comprising the clipping device, for example. Further features and expediencies of the clipping device and of the system will be described below with respect to the appended figure.
- Fig. 1: shows a perspective view of a clipping device according to an embodiment of the present invention;
- Fig. 2: shows a view of the clipping device of Fig. 1 from the side;
- Fig. 3: shows a cross-sectional view of the clipping device of Fig. 1 with the crosssection taken along line C-C in Fig 2;
- Fig. 4: shows a view of the clipping device of Fig. 1 from the top;
- Fig. 5: shows a cross-sectional view of the clipping device of Fig. 1 with the crosssection taken along line D-D in Fig 4;
- Fig. 6: shows a view of the clipping device of Fig. 1 from the bottom;
- Fig. 7: shows a perspective view of a system according to an embodiment of the present invention, comprising the clipping device of Figs. 1-6 and two panels;
- Fig. 8: shows a perspective view of the system of Fig. 7 in an assembled state;
- Fig. 9: shows a side view of the system of Fig. 8;
- Fig. 10: shows a top view of system of Fig. 8; and
- Fig. 11: shows a cross-sectional view of the system of Fig. 8 with the cross-section taken along line E-E in Fig 10.

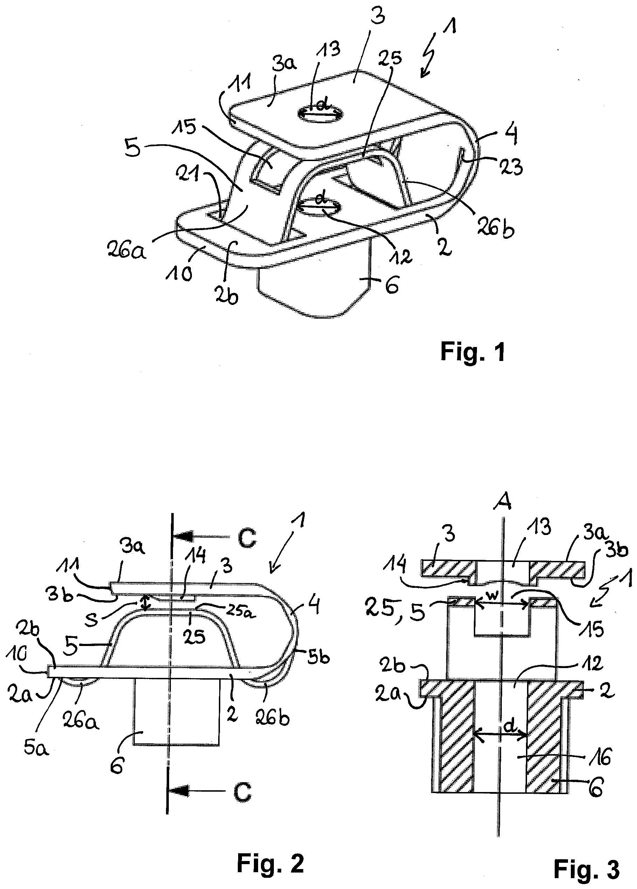

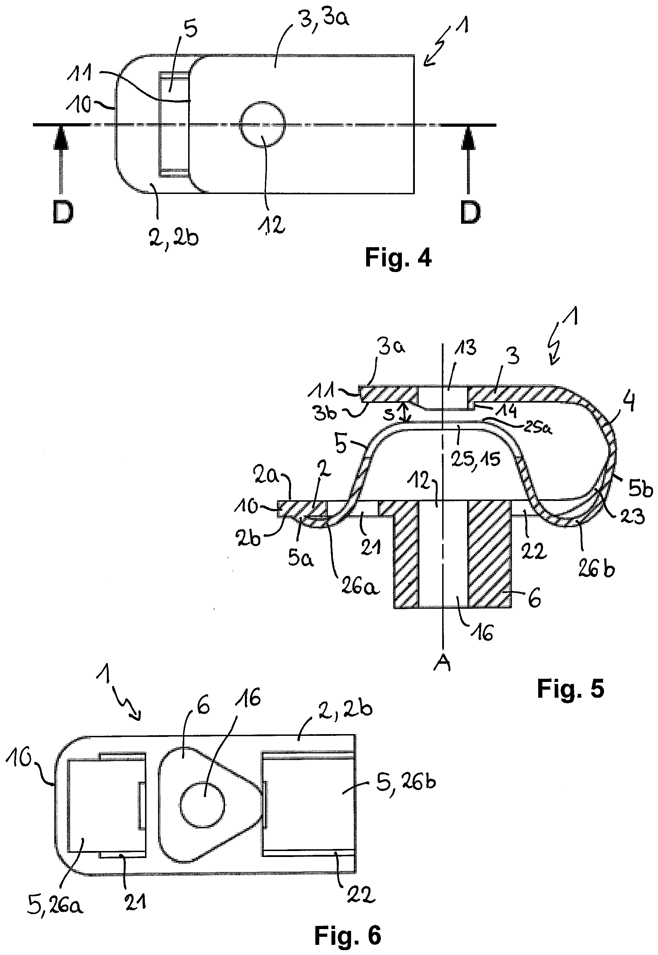

A clipping device according to an embodiment of the present invention will now be described with reference to figures 1 to 6. The clipping device 1, which can also be referred to as a fixing device or clamping device, comprises a first or lower leg 2 and a second or upper leg 3, which are connected to one another by means of a connecting portion in the form of a bridge portion 4. Together, the lower leg 2, the upper leg 3 and the bridge portion 4 form a substantially U-shaped frame of the clipping device 1. The clipping device 1 further comprises a clamping element 5 at least partially located in a space formed between the upper leg 2 and the lower leg 3 and attached to the frame, and a nut part 6 provided outside the space formed between the upper leg 2 and the lower leg 3 and attached to the lower leg 2.

In more detail, the legs 2, 3 are substantially planar bodies. The lower leg 2 comprises an inner face 2b and an outer face 2a, and the upper leg 3 comprises an inner face 3b and an outer face 3a. The legs 2, 3 are arranged substantially parallel to one another and their inner faces 2b, 3b form a space between them to receive the clamping element 5 at least partially therein. The nut part 6 is attached to the outer face 2a of the lower leg 2 and extends substantially perpendicular to the outer face 2a. The nut part 6 comprises a bore 16 having a diameter d, which bore 16 defines a central axis A of the clipping device 1. Preferably, the central axis A extends substantially perpendicular to the inner and/or outer faces of the legs 2, 3.

In a direction perpendicular to the central axis A, the lower leg 2 and the upper leg 3 each extend from the bridge portion 4 to a respective free end 10, 11 of the legs. The free end 10 of the lower leg 2 may be arranged at a greater distance from the bridge portion 4 than the free end 11 of the upper leg, i.e. the lower leg 2 may extend a greater length in a direction perpendicular to the central axis A than the upper leg 3. A width of the upper and lower legs 3, 2 and of the bridge portion 4, i.e. a width of the substantially U-shaped frame, perpendicular to the central axis A may be substantially constant.

The lower leg 2 comprises a central hole 12 that is axially aligned, i.e. coaxial, with the bore 16 of the nut part 6 and preferably has the same diameter d as the bore 16. Between the central hole 12 and the free end 10 of the lower leg 2 an opening 21 is provided that extends through the leg 2 from its inner face 2b to its outer face 2a and serves to receive a portion of the clamping element 5 therein. Likewise, an opening 22 of the lower leg 2 is provided adjacent the bridge portion 4, which opening 22 extends from the inner face 2b to the outer face 2a of the lower leg 2, and an opening 23 of the bridge portion 4 is provided adjacent the lower leg. The openings 22 and 23 of the lower leg 2 and the bridge portion 4 merge into each other and serve to receive a portion of the clamping element 5 therein.

The upper leg 3 comprises a central hole 13 that is axially aligned, i.e. coaxial, with the bore 16 of the nut part 6 and with the hole 12 of the lower leg. The hole 13 of the upper leg 3 preferably has the same diameter d as the bore 16 of the nut part 6 or is slightly larger.

A protrusion 14 is formed around an edge of the opening 13 of the upper leg 3. The protrusion 14 protrudes from the inner face 3a of the upper leg 3 into the space formed between the legs, i.e. in a direction towards the lower leg 2. The protrusion 14 serves as an engagement feature for engagement with a hole of a panel to be inserted between the upper leg 3 and the clamping element 5, as explained in more detail below.

The clamping element 5 extends from a first end 5a to a second end 5b. The first end 5a is attached to the outer face 2b of the lower leg 2 in a region between the free end 10 and the opening 21. The second end 5b of the clamping element 5 is attached to the outer face of the bridge portion 4 adjacent the opening 23 of the bridge portion 4, i.e. on the side of the bridge portion that faces away from the space formed between the legs 2, 3. Further, the clamping element 5 comprises a contact portion 25 provided in a middle section of the clamping element between its two ends 5a, 5b, and curved portions 26a, 26b provided between the contact portion 25 and the respective end 5a, 5b of the clamping element. Preferably, the clamping element is entirely composed of the contact portion 25 and the curved portions 26a, 26b, i.e. there are no further portions of the clamping element.

The curved portions 26a, 26b of the clamping element 5 each have a substantially S-shape. Specifically, the curved portions 26a, 26b each extend from the respective end 5a, 5b of the clamping element 5 away from the lower leg 2. Sections of the curved portions 26a, 26b are thus provided outside of the space formed between the legs 2, 3. Further sections of the curved portions 26a, 26b extend through the respective opening 21, 22, 23 of the lower leg 2 or of the bridge portion and into the space formed between the legs 2, 3, and extend further in a direction of the upper leg 3 to then merge into the contact portion 25.

The contact portion 25 is a substantially flat portion of the clamping element 5 and is preferably arranged parallel to the upper and lower legs. The contact portion 25 forms the section of the clamping element 5 that is closest to the upper leg 3 and that contacts an inserted panel during use of the clipping device, as explained in more detail below. A distance s between a contact face 25a of the contact portion 25 and the inner face 3b of the upper leg 3 in the state of the clipping device 1 shown in figures 1 to 6, i.e. when no panel is inserted in the clipping device, is preferably smaller than a thickness of a panel to be inserted.

The S-shaped configuration of the clamping element 5 renders the clamping element resiliently deformable. This means that due to the shape of the clamping element, the clamping element 5 is compressible in a direction towards the lower leg 2, i.e. away from the upper leg 3, such that the distance s between the contact face 25a and the inner face 3b of the upper leg 3 increases. Likewise, the clamping element 5 is expandable in a direction towards the upper leg 3, i.e. away from the lower leg 2, such that the distance s between the contact face 25a and the inner face 3b of the upper leg 3 decreases.

The contact portion 25 of the clamping element 5 further comprises a central opening 15 that has an elongate, preferably rectangular, shape and extends perpendicular to the central axis A along the entire length of the contact portion 25 and into the curved portions 26a, 26b in the present embodiment. A width w of the opening 15 perpendicular to the central axis A is preferably the same as the diameter d of the bore 16 of the nut part 6 and of the central holes 12, 13 of the lower and upper legs 2, 3. The opening 15 of the contact portion 25 is provided axially aligned, i.e. coaxially, with the bore 16 of the nut part 6 and to the holes 12, 13 of the legs 2, 3.

Generally, the legs 2, 3 and the bridge portion 4 of the clipping device 1 are preferably relatively rigid as compared to the resiliently deformable, i.e. compressible and/or extendable, clamping element 5. This means that when a panel is received in the clipping device 1, a clamping force is exerted onto the panel mainly due to the deformation of the clamping element, whereas the legs 2, 3 substantially do not alter their shape or configuration.

In the present embodiment, the nut part 6 has a substantially triangular contour in a plane perpendicular to the central axis A, and the bore 16 is provided substantially centrally within the nut part 6. Preferably, the bore 16 of the nut part 6 is unthreaded, i.e. it has smooth walls. The nut part 6 is fixed to the lower leg 2 with respect to axial and rotational displacement. For example, the nut part 6 can be monolithically provided with the lower leg 2, or the nut part 6 can be firmly attached to it.

The clipping device can be made of any material. Preferably, the clipping device is made of a metal of plastic.

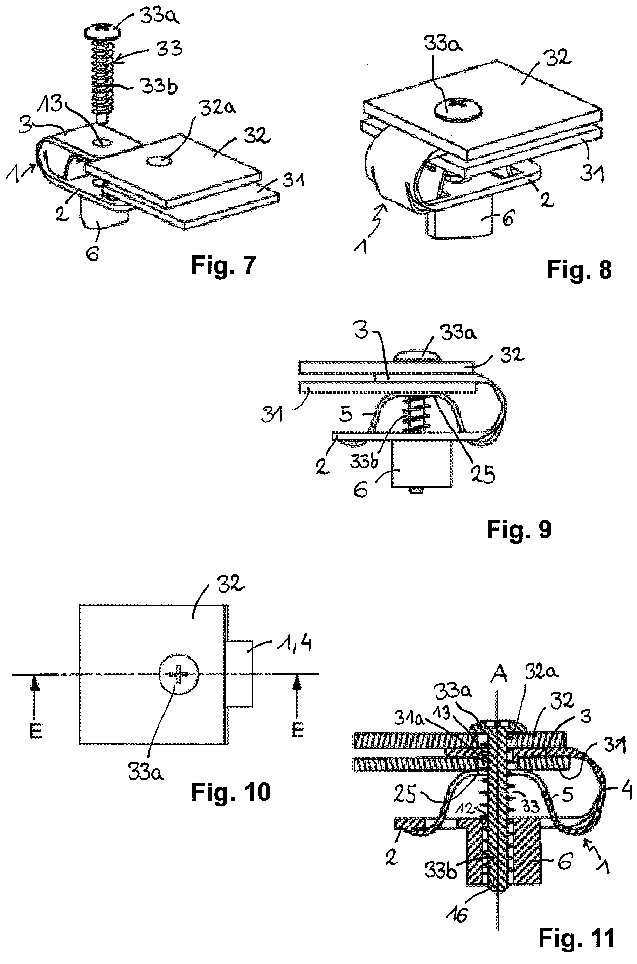

Next, use of the clipping device 1 will be explained with reference to figures 7 to 11. The clipping device 1 is provided with a first panel 31 and a second panel 32, which panels each comprise respective holes 31a, 32a with a diameter identical to or slightly larger than the diameter d of the holes 12, 13 and the bore 16 of the clipping device 1. Further, a bolt 33 is provided for attaching the panels 31, 32 and the clipping device 1 to each other.

The bolt 33 comprises a head 33a and a shank with an external thread 33b. The head 33a can have an engagement feature for engagement with an instrument, such as a screw driver. Preferably, the thread 33b is a self-tapping thread that engages the unthreaded bore 16 of the nut part when screwed therein, i.e. the bolt 33 is preferably a self-tapping screw.

During use, the first panel 31 is inserted into the clipping device 1 between the upper leg 3 and the clamping element 5 such that the hole 31a of the first panel 31 overlaps, i.e. is axially aligned, with the hole 13 of the upper leg 3. Insertion of the panel 31 may be facilitated by means of the protrusion 14 formed on the inner face 3b of the upper leg around the hole 13, which protrusion 14 engages the hole 31a provided in the first panel 31.

A thickness of the first panel 31 preferably exceeds the distance s between the contact portion 25 and the upper leg 3 in the state of the clipping device 1 shown in figures 1 to 6, i.e. when no panel is inserted in the clipping device 1. Due to the compressibility of the clamping element 5, the distance s increases when the first panel 31 is inserted. The resiliency of the clamping element 5 then exerts a force upon the inserted panel 31 to clamp the first panel between the upper leg 3 and the clamping element 5 of the clipping device 1.

After insertion of the first panel 31, or at the same time, the second panel 32 is arranged to contact the outer face 3a of the upper leg 3 such that the hole 32a of the second panel 32 overlaps, i.e. is axially aligned, with the hole 13 of the upper leg 3. Then, the bolt 33 is inserted through the overlapping holes 31a, 32a of the panels 31, 32 and the holes 12, 13 of the legs and the opening 15 of the clamping element 5, and inserted, preferably screwed, into the bore 16 of the nut part 6. In doing so, the bolt 33 engages the holes 12, 13 of the legs and the bore 16 of the nut part 6 to firmly attach the panels 31, 32 and the clipping device 1 to one another. Specifically, the second panel 32 is clamped between the head 33a of the bolt and the upper leg 3, and the upper and lower legs 2, 3 are compressed towards one another to increase the clamping force that presses the first panel 31 against the upper leg 3. The panels 31, 32 are thus arranged substantially parallel to one another, with the upper leg 3 of the clipping device 1 arranged between them.

The clipping device 1, the panels 31, 32 and the bolt 33 are not limited to the embodiment described above with respect to the figures. Rather, modifications of the clipping device and/or panels and/or bolt are conceivable as long as they fall within the wording of the appended claims. For example, the bore of the nut part can be provided with a thread so as to receive a screw therein that is not a self-tapping screw.

Furthermore, the nut part can deviate from a triangular shape. According to a not claimed embodiment, instead of providing the nut part on the outer face of the lower leg, it can also be provided on the outer face of the upper leg. Likewise, according to another not claimed embodiment, the clamping element can also be attached to the upper leg 3 instead of being attached to the lower leg 2. Instead of panels any other parts comprising a respective hole or bore can be used.

## Claims

1. A clipping device for attachment to a panel, the clipping device (1) comprising
a first leg (2) and a second leg (3) connected to one another by means of a connecting portion (4) so as to provide a substantially U-shaped frame, the first and second legs forming a space between them,
a clamping element (5) provided at least partially within the space formed between the first and second legs and attached to the first leg (2), the clamping element (5) being resiliently compressible in a direction away from the second leg (3) and being resiliently expandable in a direction towards the second leg (3), and
a nut part (6) arranged on the first leg (2) and attached to a side (2a, 3a) of the first leg that faces away from the space formed between the first and second legs.

2. The clipping device according to claim 1, wherein the clamping element (5) comprises a first end (5a) and a second end (5b), the first end (5a) being attached to the first leg (2), and a contact portion (25) facing the second leg (3).

3. The clipping device according to claim 2, wherein the second end (5b) of the clamping element (5) is attached to the connecting portion (4).

4. The clipping device according to claim 2 or 3, wherein, in a state of the clipping device (1) in which no panel is inserted in the clipping device, a minimum distance (s) between a contact face (25a) of the contact portion (25) that faces the second leg (3) and the second leg (3) is smaller than a thickness of a panel to be inserted.

5. The clipping device according to one of claims 2 to 4, wherein the contact portion (25) has a substantially flat shape and is preferably arranged substantially parallel to a face (3b) of the second leg (3) facing the contact portion (25).

6. The clipping device according to one of claims 2 to 5, wherein the contact portion (25) is arranged in the space formed between the first and second legs (2, 3) and at a distance from the first leg (2).

7. The clipping device according to one of claims 2 to 6, wherein the clamping element (5) comprises a curved portion (26a, 26b) adjacent the first end (5a) or the second end (5b), which curved portion protrudes from the first leg (2) in a direction away from the second leg (3) in a section thereof.

8. The clipping device of one of claims 2 to 7, wherein the clamping element (5) is substantially S-shaped at least in a portion thereof, preferably in a portion extending from the first or second end (5a, 5b) to the contact portion (25).

9. The clipping device according to one of claims 1 to 8, wherein each one of the first leg (2), the second leg (3) and the clamping element (5) comprises an opening (12, 13, 15), the openings being arranged coaxial with respect to one another so as to receive a bolt within the openings, and wherein the nut part (6) comprises a bore (16) coaxial with the openings (12, 13, 15) of the first and second legs and the clamping element.

10. The clipping device according to claim 9, wherein a protrusion (14) is formed around an edge of the opening (13) of the second leg (3), the protrusion protruding further into the space formed between the first and second legs (2, 3) than a face (3b) of the second leg (3) facing the contact portion (25).

11. The clipping device according to claim 9 or 10 and according to one of claims 2 to 8, wherein the opening (15) of the clamping element (5) has an elongate shape, preferably extending at least along the entire length of the contact portion (25) of the clamping element.

12. The clipping device according to one of claims 9 to 11, wherein the bore (16) of the nut part (6) is unthreaded.

13. The clipping device according to one of claims 1 to 12, wherein the nut part (6) is fixed to the respective leg (2, 3) with respect to axial and/or rotational displacement.

14. A system, comprising a clipping device (1) according to one of claims 1 to 13 and a first panel (31) configured to be received between the clamping element (5) and the second leg (3) of the clipping device (1).

15. The system of claim 14, further comprising a bolt (33), in particular a self-tapping screw, to firmly attach the panel (31) to the clipping device (1) and preferably also to a second panel (32).

## Patentansprüche

1. Klemmvorrichtung zur Befestigung an einer Platte, wobei die Klemmvorrichtung (1) umfasst
einen ersten Schenkel (2) und einen zweiten Schenkel (3), die mittels eines Verbindungsabschnitts (4) miteinander verbunden sind, um einen im Wesentlichen U-förmigen Rahmen zu bilden, wobei der erste und der zweite Schenkel einen Raum zwischen sich bilden,
ein Klemmelement (5), das zumindest teilweise in dem zwischen dem ersten und dem zweiten Schenkel gebildeten Raum vorgesehen und an dem ersten Schenkel (2) befestigt ist, wobei das Klemmelement (5) in eine Richtung von dem zweiten Schenkel (3) weg elastisch zusammendrückbar und in eine Richtung zu dem zweiten Schenkel (3) hin elastisch ausdehnbar ist, und
ein Mutterteil (6), das an dem ersten Schenkel (2) angeordnet und an einer Seite (2a, 3a) des ersten Schenkels befestigt ist, die von dem zwischen dem ersten und dem zweiten Schenkel gebildeten Raum abgewandt ist.

2. Klemmvorrichtung nach Anspruch 1, wobei das Klemmelement (5) ein erstes Ende (5a) und ein zweites Ende (5b) aufweist, wobei das erste Ende (5a) an dem ersten Schenkel (2) befestigt ist, und einen Kontaktabschnitt (25), der dem zweiten Schenkel (3) zugewandt ist.

3. Klemmvorrichtung nach Anspruch 2, wobei das zweite Ende (5b) des Klemmelements (5) an dem Verbindungsabschnitt (4) befestigt ist.

4. Klemmvorrichtung nach Anspruch 2 oder 3, wobei in einem Zustand der Klemmvorrichtung (1), in dem keine Platte in die Klemmvorrichtung eingesetzt ist, ein Mindestabstand (s) zwischen einer Kontaktfläche (25a) des Kontaktabschnitts (25), der dem zweiten Schenkel (3) zugewandt ist, und dem zweiten Schenkel (3) kleiner als eine Dicke einer einzusetzenden Platte ist.

5. Klemmvorrichtung nach einem der Ansprüche 2 bis 4, wobei der Kontaktabschnitt (25) eine im Wesentlichen flache Form aufweist und vorzugsweise im Wesentlichen parallel zu einer dem Kontaktabschnitt (25) zugewandten Fläche (3b) des zweiten Schenkels (3) angeordnet ist.

6. Klemmvorrichtung nach einem der Ansprüche 2 bis 5, wobei der Kontaktabschnitt (25) in dem zwischen dem ersten und zweiten Schenkel (2, 3) gebildeten Raum und in einem Abstand zum ersten Schenkel (2) angeordnet ist.

7. Klemmvorrichtung nach einem der Ansprüche 2 bis 6, wobei das Klemmelement (5) nahe des ersten Endes (5a) oder des zweiten Endes (5b) einen gekrümmten Abschnitt (26a, 26b) aufweist, der abschnittsweise vom ersten Schenkel (2) in eine Richtung weg vom zweiten Schenkel (3) vorsteht.

8. Klemmvorrichtung nach einem der Ansprüche 2 bis 7, wobei das Klemmelement (5) zumindest abschnittsweise, vorzugsweise in einem Abschnitt, der sich vom ersten oder zweiten Ende (5a, 5b) zum Kontaktabschnitt (25) erstreckt, im Wesentlichen S-förmig ausgebildet ist.

9. Klemmvorrichtung nach einem der Ansprüche 1 bis 8, wobei der erste Schenkel (2), der zweite Schenkel (3) und das Klemmelement (5) jeweils eine Öffnung (12, 13, 15) aufweisen, wobei die Öffnungen koaxial zueinander angeordnet sind, um eine Schraube in den Öffnungen aufzunehmen, und wobei das Mutterteil (6) eine Bohrung (16) aufweist, die koaxial zu den Öffnungen (12, 13, 15) des ersten und zweiten Schenkels und des Klemmelements ist.

10. Klemmvorrichtung nach Anspruch 9, wobei ein Vorsprung (14) um einen Rand der Öffnung (13) des zweiten Schenkels (3) herum ausgebildet ist, wobei der Vorsprung weiter in den zwischen dem ersten und dem zweiten Schenkel (2, 3) gebildeten Raum hineinragt als eine dem Kontaktabschnitt (25) zugewandte Fläche (3b) des zweiten Schenkels (3).

11. Klemmvorrichtung nach Anspruch 9 oder 10 und nach einem der Ansprüche 2 bis 8, wobei die Öffnung (15) des Klemmelements (5) eine längliche Form aufweist, die sich vorzugsweise zumindest über die gesamte Länge des Kontaktabschnitts (25) des Klemmelements erstreckt.

12. Klemmvorrichtung nach einem der Ansprüche 9 bis 11, wobei die Bohrung (16) des Mutterteils (6) gewindelos ist.

13. Klemmvorrichtung nach einem der Ansprüche 1 bis 12, wobei das Mutterteil (6) an dem jeweiligen Schenkel (2, 3) in Bezug auf eine axiale und/oder rotatorische Verschiebung befestigt ist.

14. System, umfassend eine Klemmvorrichtung (1) nach einem der Ansprüche 1 bis 13 und eine erste Platte (31), die so ausgebildet ist, dass sie zwischen dem Klemmelement (5) und dem zweiten Schenkel (3) der Klemmvorrichtung (1) aufnehmbar ist.

15. System nach Anspruch 14, weiter umfassend eine Schraube (33), insbesondere eine selbstschneidende Schraube, um die Platte (31) fest mit der Klemmvorrichtung (1) und vorzugsweise auch mit einer zweiten Platte (32) zu verbinden.

## Revendications

1. Un dispositif d'attache pour fixation à un panneau, le dispositif d'attache (1) comprenant
une première jambe (2) et une deuxième jambe (3) connectées l'une à l'autre au moyen d'une portion de connexion (4) de manière à fournir un cadre sensiblement en forme de U, les première et deuxième jambes formant un espace entre elles,
un élément de serrage (5) prévu au moins partiellement à l'intérieur de l'espace formé entre les première et deuxième jambes et fixé à la première jambe (2), l'élément de serrage (5) étant élastiquement compressible dans une direction s'éloignant de la deuxième jambe (3) et étant élastiquement extensible dans une direction vers la deuxième jambe, et
une partie d'écrou (6) agencée sur la première jambe (2) et fixée à un côté (2a, 3a) de la première jambe qui est orienté dans une direction s'éloignant de l'espace formé entre les première et deuxième jambes.

2. Le dispositif d'attache selon la revendication 1, dans lequel l'élément de serrage (5) comprend une première extrémité (5a) et une deuxième extrémité (5b), la première extrémité (5a) étant fixée à la première jambe (2), et une portion de contact (25) faisant face à la deuxième jambe (3).

3. Le dispositif d'attache selon la revendication 2, dans lequel la deuxième extrémité (5b) de l'élément de serrage (5) est fixée à la portion de connexion (4).

4. Le dispositif d'attache selon la revendication 2 ou 3, dans lequel, dans un état du dispositif d'attache (1) dans lequel aucun panneau n'est inséré dans le dispositif d'attache, une distance minimale (s) entre une face de contact (25a) de la portion de contact (25) qui fait face à la deuxième jambe (3) et la deuxième jambe (3) est inférieure à une épaisseur d'un panneau à insérer.

5. Le dispositif d'attache selon l'une des revendications 2 à 4, dans lequel la portion de contact (25) a une forme sensiblement plate et est de préférence agencée sensiblement parallèlement à une face (3b) de la deuxième jambe (3) faisant face à la portion de contact (25).

6. Le dispositif d'attache selon l'une des revendications 2 à 5, dans lequel la portion de contact (25) est agencée dans l'espace formé entre les première et deuxième jambes (2, 3) et à une distance de la première jambe (2).

7. Le dispositif d'attache selon l'une des revendications 2 à 6, dans lequel l'élément de serrage (5) comprend une portion incurvée (26a, 26b) adjacente à la première extrémité (5a) ou à la deuxième extrémité (5b), laquelle portion incurvée fait saillie de la première jambe (2) dans une direction s'éloignant de la deuxième jambe (3) dans une section de celle-ci.

8. Le dispositif d'attache selon l'une des revendications 2 à 7, dans lequel l'élément de serrage (5) est sensiblement en forme de S au moins dans une portion de celui-ci, de préférence dans une portion s'étendant de la première ou deuxième extrémité (5a, 5b) à la portion de contact (25).

9. Le dispositif d'attache selon l'une des revendications 1 à 8, dans lequel chacune de la première jambe (2), de la deuxième jambe (3) et de l'élément de serrage (5) comprend une ouverture (12, 13, 15), les ouvertures étant agencées coaxialement les unes par rapport aux autres de manière à recevoir un boulon à l'intérieur des ouvertures, et dans lequel la partie d'écrou (6) comprend un alésage (16) coaxial avec les ouvertures (12, 13, 15) des première et deuxième jambes et l'élément de serrage.

10. Le dispositif d'attache selon la revendication 9, dans lequel une saillie (14) est formée autour d'un bord de l'ouverture (13) de la deuxième jambe (3), la saillie faisant saillie plus davantage dans l'espace formé entre les première et deuxième jambes (2, 3) qu'une face (3b) de la deuxième jambe (3) faisant face à la portion de contact (25).

11. Le dispositif d'attache selon la revendication 9 ou 10 et selon l'une des revendications 2 à 8, dans lequel l'ouverture (15) de l'élément de serrage (5) a une forme allongée, s'étendant de préférence au moins sur toute la longueur de la portion de contact (25) de l'élément de serrage.

12. Le dispositif d'attache selon l'une des revendications 9 à 11, dans lequel l'alésage (16) de la partie d'écrou (6) est non fileté.

13. Le dispositif d'attache selon l'une des revendications 1 à 12, dans lequel la partie d'écrou (6) est fixée à la jambe respective (2, 3) par rapport à un déplacement axial et/ou rotatif.

14. Un système, comprenant un dispositif d'attache (1) selon l'une des revendications 1 à 13, et un premier panneau (31) configuré pour être reçu entre l'élément de serrage (5) et la deuxième jambe (3) du dispositif d'attache (1).

15. Le système selon la revendication 14, comprenant en outre un boulon (33), en particulier une vis auto-taraudeuse, pour fixer fermement le panneau (31) au dispositif d'attache (1) et, de préférence, également à un deuxième panneau (32).
